# EUROPÄISCHE PATENTSCHRIFT

(11) **EP 1 977 641 B1**
(45) Veröffentlichungstag und Bekanntmachung des Hinweises auf die Patenterteilung: **06.03.2019**
(21) Anmeldenummer: 08004991.9
(22) Anmeldetag: 18.03.2008
(51) Int. Cl.: A01D 43/08

(54) **Erntegerät zum Ernten von stängeligem Erntegut**
Harvesting device for harvesting stalk crops
Moissonneuse destinée à récolter des épinards en branches

(30) Priorität: 02.04.2007 DE 102007016155
(43) Veröffentlichungstag der Anmeldung: 08.10.2008
(73) Patentinhaber: CLAAS Saulgau GmbH, 88348 Bad Saulgau (DE)
(72) Erfinder: Prenzler, Jürgen, 88379 Unterwaldhausen (DE)

(56) Entgegenhaltungen:
- EP-A1- 0 760 200
- EP-A1- 1 106 047
- EP-A2- 0 099 527
- DE-U1- 20 305 666
- DE-U1- 29 702 902
- DE-U1-202005 003 236

## Beschreibung

Die Erfindung betrifft ein Erntegerät als Vorsatzgerät für landwirtschaftliche Erntemaschinen, insbesondere für Feldhäcksler zum Mähen, Aufnehmen und Weiterführen eines stängelartigen Erntegutstroms, beispielsweise für Maispflanzen in den Einzugsspalt des Einzugsgehäuses gemäß dem Oberbegriff des unabhängigen Anspruchs 1.

### Stand der Technik

Bekannt sind diese Vorsatzgeräte insbesondere auch unter dem Begriff Maisgebisse. Diese sind dem Fachmann in verschiedenen Ausführungen bekannt. Die Aufgabe dieser Vorsatzgeräte für Feldhäcksler besteht darin, die stehenden Maispflanzen während der Vorwärtsfahrt abzumähen und die abgemähten Pflanzen dabei so weiter zu transportieren, dass sie in den Einzugsbereich bzw. in den Einzugsspalt des Einzugsgehäuses des Feldhäckslers gelangen. Bekannt sind Vorsatzgeräte mit mehreren quer zur Fahrt- und Arbeitsrichtung nebeneinander liegenden umlaufend angetriebenen Mäh- und Fördertrommeln mit übereinander liegenden mit Fördertaschen ausgestatteten scheibenförmigen Einzugselementen, denen im rückwärtigen Bereich zusätzlich Querförder- und Umlenkelemente zugeordnet sind.

Angetrieben werden die Mäh- und Fördertrommeln bzw. Mäh und Förderelemente vom Verbrennungsmotor des Trägerfahrzeugs ausgehend über einen mechanisch angetriebenen Antriebsstrang, wobei den Mäh- und Förderelementen ein sich quer zur Fahrtrichtung erstreckender Antriebsstrang vorgelagert ist, an dem die erforderlichen Antriebsmomente für die Mäh- und Förderelemente mittels Winkelgetrieben abgegriffen werden.

Mit zunehmenden Arbeitsbreiten nehmen die Anzahlen der Mäh- und Förderelemente zu und somit auch die in Bewegung zu setzenden umlaufend angetriebenen Massen der Rotationselemente. Kommt es im laufenden Ernteprozess zu Unterbrechungen und werden dabei die Rotationselemente still gesetzt, so müssen alle Rotationselemente bei Fortsetzung des Ernteprozesses erneut auf ihre Betriebsdrehzahl gebracht werden, welches den Antriebselementen hohe Drehmomente zur Beschleunigung der Schwungmassen abverlangt. Hier setzt die Aufgabe der Erfindung an, die eine Lösung vorschlägt, die Rotationselemente zügig auf ihre Betriebsdrehzahl hochzufahren, ohne dass dabei unnötige Belastungsspitzen auf die Antriebselemente einwirken.

Aus DE 297 02 902 U1 ist eine Maschine zum reihenunabhängigen Mähen von Mais und dergleichen stängelartigem Erntegut bekannt, mit einer Mehrzahl von Einzugs- und Mähtrommeln, die in spiegelsymmetrischer Anordnung beidseits der vertikalen Längsmittelebene der Maschine einem Häcksler mit Einschubwalzen für das geschnittene Erntegut mittig vorzuordnen und für eine Drehbewegung um im wesentlichen vertikale Drehachsen von einer an das Zentralgetriebe des Häckslers anschließbaren Antriebseinrichtung antreibbar sind, die zwei jeweils eine Gruppe von Einzugs- und Mähtrommeln antreibende einzelne Wellenstränge beidseits der vertikalen Längsmittelebene der Maschine umfasst, wobei die beiden Wellenstränge von einer an das Zentralgetriebe des Häckslers anschließbaren Verbindungswelle überbrückt sind, die eine beim Anfahren der Maschine für den Erntebetrieb aktivierbare Einrichtung zum zeitversetzten Einleiten der Drehbewegung der beiden Wellenstränge umfasst.

Aus EP 0 099 527 A2 ist eine Maschine zum Mähen und Häckseln von Mais oder ähnlichem stängelartigen Erntegut bekannt, mit Einzugs- und Mäheinrichtungen, die um eine im Wesentlichen vertikale Achse rotierend angetrieben sind, wobei die Einzugs- und die Mäheinrichtungen jeweils mittels einer durch Federn gespannten Reibkupplung miteinander gekuppelt sind.

### Aufgabenstellung

Die Aufgabe der Erfindung besteht darin, den Antrieb eines Vorsatzgerätes der zuvor genannten Art so zu gestalten, dass während der Hochlaufphase die Belastungsspitzen der Drehkräfte hervorgerufen durch die Winkelbeschleunigung der in Rotationsbewegung zu versetzenden Schwungmassen zu bedämpfen sind und dadurch die Belastungsspitzen, welche auf die Antriebselemente einwirken zu kappen sind, ohne dabei die Hochlaufzeit wesentlich zu verlängern.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Durch den Einbau von drehmomentübertragenden Elementen der erfinderischen Art innerhalb des Antriebsstrangs der Mäh- und Fördertrommeln werden nicht alle Rotationselemente gleichzeitig beschleunigt. Dieses kann beispielsweise dadurch erfolgen, dass zwischen einer Mähscheibe und deren Förderscheibe eine Drehmoment übertragende Kupplung vorgesehen ist, welche die Antriebsverbindung zwischen diesen beiden Rotationselementen zumindest zeitweise schlupfaufweisend entweder völlig unterbricht oder verzögert und bedämpfend die Drehkräfte auf das zweite Rotationselement gegenüber einem ersten Rotationselement nach dem oder während des Hochlaufs des ersten Rotationselements in Bewegung gesetzt wird.

Dieses hat den Vorteil, dass die Schwungmassen nicht aller am Beschleunigungsprozess teilnehmenden Rotationselemente der Mäh- und Fördertrommeln mit der gleichen Winkelbeschleunigung auf die Betriebsdrehzahl hochgefahren werden, so dass dadurch eine bedämpfende Wirkung hinsichtlich der beschleunigenden Drehkräfte auf die Antriebsorgane verursacht wird.

Erfindungsgemäß sind die Kupplungseinrichtungen integraler Bestandteil des einzelnen Mäh- und Förderelements derart, dass die Mähscheibe, die Kupplungseinrichtung und die Fördertrommel eine gemeinsame Rotationsachse aufweisen und die Kupplungseinrichtung die Funktion einer öffnenden oder schließenden Antriebsverbindung zwischen Mähscheibe und Fördertrommel aufweist.

Gemäß der erfinderischen Ausgestaltung ist die Kupplung als Föttinger-Getriebe als Turbokupplung ausgebildet, so dass das jeweils abgekuppelte Rotationselement während des Hochlaufs der Drehzahl des voreilenden Rotationselements nacheilt. Dieses bewirkt insbesondere den Vorteil der stufenlosen Drehzahlanpassung in Verbindung mit einem Stoß und schwingungsdämpfenden Überlastschutz. Erfindungsgemäß kann eine derartige Kupplung auch als selbsttätig durchschaltende Turbokupplung ausgebildet sein, die bei Erreichen der Betriebsdrehzahl in eine starre Kupplung übergeht, so dass der sonst unvermeidbare Schlupf bei Strömungsgetrieben vermieden wird. Um das Reversieren der Mäh- und Förderelemente im Verstopfungsfall zu ermöglichen, sind die Kupplungen mit einer Überbrückung ausgestaltet, die bei Drehrichtungsumkehr wirksam wird.

In einer weiteren nicht beanspruchten Ausgestaltung kann eine derartige Kupplungsverbindung aber auch in den Hauptantriebsstrang vor dem Eingangsgetriebe zum Antrieb der Vorgelegewelle angeordnet sein, oder beispielsweise können auch zwei dieser Kupplungen in die Vorgelegewelle eingebaut sein, so dass beispielsweise nur außenliegende Mäh- und Förderscheiben oder außenliegende Gruppen von Mäh- und Förderscheiben verzögert auf ihre Betriebsdrehzahl hochgefahren werden.

Die Erfindung ist exemplarisch an dem nachfolgenden Ausführungsbeispiel dargestellt und beschrieben.

### Ausführungsbeispiel

Nähere Einzelheiten der Erfindung sind den nachfolgenden Figurendarstellungen und deren Beschreibungen zu entnehmen.

Es zeigen:
- Fig. 1: zeigt eine Draufsicht eines Erntegerätes nach der Erfindung
- Fig. 2: zeigt einen Schnitt durch eine Mäh- und Fördereinheit eines Erntegerätes nach der Erfindung
- Fig. 3: zeigt eine Draufsicht auf die Mäh- und Fördereinheit gemäß Fig. 2
- Fig. 4: zeigt ein nicht beanspruchtes Ausführungsbeispiel der Erfindung mit zwei Kupplungen in der Vorgelegewelle

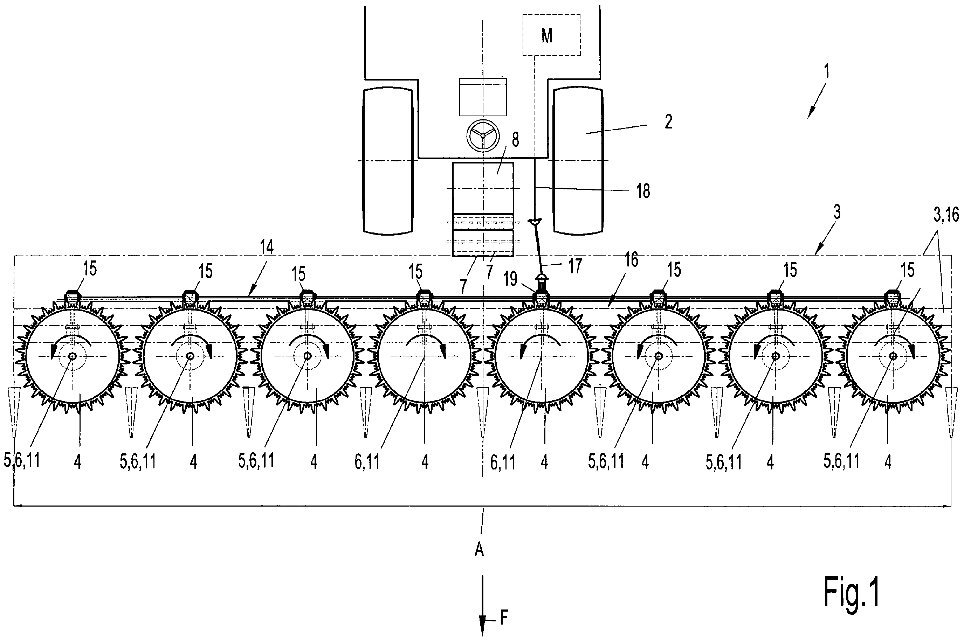

In Fig. 1 ist ein Erntegerät 1 als Vorsatzgerät für Feldhäcksler 2 mit um Hochachsen 6 umlaufend angetriebenen Mäh- und Fördereinheiten 4 nach der Erfindung dargestellt. Dieses ist dazu vorgesehen, stängeliges Erntegut wie Maispflanzen abzumähen und aufzunehmen und diese dann in Richtung des Einzugsspaltes 7 des Einzugsgehäuses 8 des Trägerfahrzeugs 2 bzw. Feldhäckslers weiter zu fördern. Über die Arbeitsbreite A, die sich quer zur Fahrtrichtung F erstreckt, verteilen sich beispielhaft acht Mäh- und Fördereinheiten 4, deren Drehrichtungen durch Drehrichtungspfeile gekennzeichnet sind.

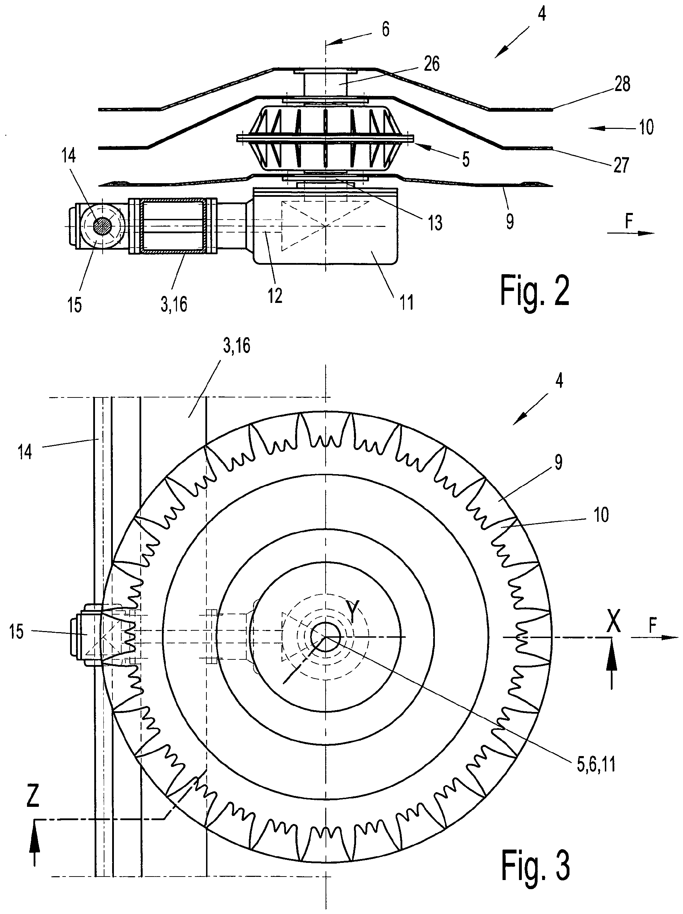

Fig. 2 zeigt einen Schnitt durch eine Mäh- und Fördereinheit 4 eines Erntegerätes 1 nach der Erfindung gemäß Schnittverlauf X-Y-Z der Fig.3, die zugleich eine Draufsicht auf die Mäh- und Fördereinheit 4 gemäß Fig.2 zeigt. Die Mäh- und Fördereinheit 4 besteht im Wesentlichen aus einer Mähscheibe 9 und zwei darüber liegenden, einer unteren 27 und einer oberen Einzugs- und Förderscheibe 28, die untereinander verschraubt mit dem Flanschelement 26 gemeinsam eine Einheit als Fördertrommel 10 bilden, einem Winkelgetriebe 11, ausgebildet als Kegelradgetriebe, dessen Antriebswelle 12 etwa in Fahrtrichtung verläuft und dessen Abtriebswelle 13 aufwärts gerichtet die Mähscheibe 9 und die Fördertrommel 10 aufnimmt, und einer Kupplungseinrichtung 5, welche die Mähscheibe 9 und die Mähtrommel 10 miteinander verbindet.

Angetrieben wird die Mäh- und Fördereinheit 4 von einer Vorgelegewelle 14, die antriebsseitig über einen Hauptantriebsstrang 18 mit dem Motor M des Trägerfahrzeugs 2 in Wirkverbindung steht. Die Antriebsverbindung der Antriebswelle 12 des Winkelgetriebes 11 an die Vorgelegewelle 14 erfolgt über ein weiteres Winkelgetriebe 15, vorzugsweise ausgebildet als Kegelradgetriebe. Dabei stützt sie die Mäh- und Fördereinheit 4 einschließlich der Winkelgetriebe 11,15 an einem Hohlprofil 16 des Maschinengestells 3 ab. In Fig. 1 ist das Maschinengestell 3 symbolisch als strichpunktierte Linie angedeutet.

Die Mähscheibe 9 ist drehfest mit der Abtriebswelle 13 verbunden, wohingegen die Abtriebswelle 13 durch eine drehmomentübertragende Kupplungseinrichtung 5 mit der Fördertrommel 10 verbunden ist.

Die Kupplungseinrichtung 5 ist so ausgelegt, dass in der Hochlauf- bzw. Beschleunigungsphase die Mähscheiben 9 oder die Fördertrommeln 10 entweder auf ihre Betriebsdrehzahl gebracht werden können bevor der jeweils andere Teil, die Mähscheibe oder die Fördertrommel, zeitlich versetzt auf Betriebsdrehzahl hoch gefahren werden, oder dass die Mähscheibe 9 und Fördertrommel 10 des Mäh- und Förderelements 4 derart miteinander gekoppelt sind, dass die Kupplungseinrichtung 5 es ermöglicht, dass die Mähscheibe 9 und die Fördertrommel 10 zumindest zeitweise während der Hochlaufphase mit ungleicher Winkelgeschwindigkeit beschleunigt werden können. Dabei ist in besonders vorteilhafter Weise die Kupplungseinrichtung 5 als Föttinger-Getriebe ausgebildet. Die Kupplungseinrichtung 5 kann insbesondere als selbsttätig durchschaltende hydrodynamische Turbokupplung ausgebildet sein, welches einen Sanftanlauf und einen stoß- und schwingungsdämpfenden Überlastschutz bietet. Ein kennzeichnendes Merkmal derartiger Kupplungseinrichtungen ist es, dass sie zumindest in der Hochlaufphase und damit zeitweise Schlupf aufweisen.

Je nach Ausgestaltung des Erntegerätes ist es auch möglich nur einen Teil der Mäh- und Fördereinheiten 4 mit einer derartigen Kupplungseinrichtung 5 auszurüsten. Wie in Fig.1 dargestellt, sind beispielhaft nur die jeweils äußeren drei Mäh- und Fördereinheiten 4 mit einer derartigen Kupplung 5 ausgestattet.

Eine weitere nicht beanspruchte Möglichkeit, während der Hochlaufphase die Belastungsspitzen der Drehkräfte, hervorgerufen durch die Winkelbeschleunigung der in Rotationsbewegung zu versetzenden Schwungmassen, zu bedämpfen, besteht darin, die Vorgelegewelle 14 als Teil des Antriebsstrangs des Erntegerätes 1 für die Mäh- und Förderelemente 4 mit wenigstens einer, aber auch mehreren Kupplungseinrichtungen 22,22' so auszugestalten, dass ein Sanftanlauf aller oder einem Teil der Mäh- und Fördereinheiten 4 des Erntegerätes 1 möglich ist. Auch dieses ermöglicht es, dass zumindest zeitweise während der Hochlaufphase wenigstens zwei Mäh- und Förderelemente 4 des Erntegerätes mit ungleicher Winkelgeschwindigkeit beschleunigt werden können.

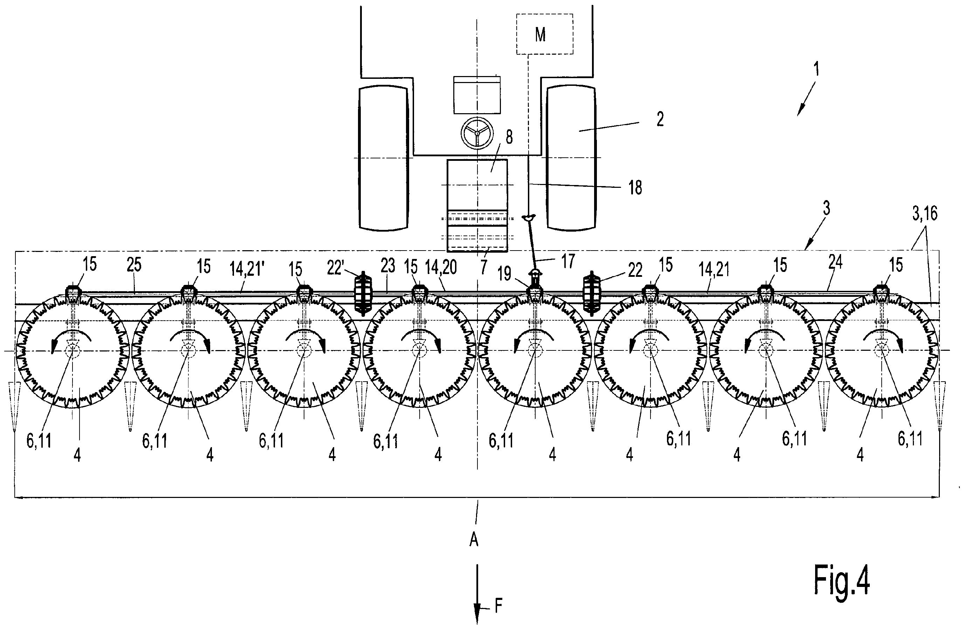

Fig.4 zeigt ein nicht beanspruchtes Ausführungsbeispiel mit zwei Kupplungseinrichtungen 22,22', vorzugsweise ausgebildet als Turbokupplungen, in der Vorgelegewelle 14 zum Antrieb der Mäh- und Förderscheiben 4. Dabei ist die Vorgelegewelle 14 in bekannter Weise mittels einer Gelenkwelle 17 als Teil des Hautantriebsstrangs 18 mit dem Motor M des Trägerfahrzeugs 2 verbunden. Die Gelenkwelle 17 ist an der Eingangswelle eines Winkelgetriebes 19 des Erntegerätes 1 angeschlossen, welches zugleich von der Vorgelegewelle 14 durchsetzt ist.

Die Vorgelegewelle 14 ist in Ihrer Längsachse zwei mal geteilt und sie besteht damit aus den Teilabschnitten 23,24,25, wobei in dem Ausführungsbeispiel der mittlere Teilabschnitt als Mittelwelle 20 und die äußeren Teilabschnitte 24,25 als Endwellen 21,21' bezeichnet werden sollen. Die Teilungsfugen der Teilabschnitte 23,24,25 befinden sich innerhalb der Turbokupplungen 22,22', so dass jeweils die eine Hälfte der Turbokupplung 22,22' mit ihrem Pumpenteil mit der Mittelwelle 20 und die andere Hälfte der Turbokupplung mit ihrem Turbinenteil mit den Endwellen 22,22' drehfest verbunden ist. Auch diese Turbokupplungen 22,22' sind vorteilhafterweise als selbsttätig durchschaltende hydrodynamische Turbokupplungen ausgelegt, so dass diese bei Erreichen der Betriebsdrehzahl keinen Schlupf mehr aufweisen.

In einer weiteren nicht beanspruchten Ausgestaltung kann die zumindest eine Kupplungseinrichtung 22,22' als Verbindungselement zum Hauptantriebsstrang 18 des Trägerfahrzeugs als Drehmomentwandler als Föttinger-Wandler ausgebildet sein, welches den Vorteil bietet, dass zu Beginn des Hochlaufs eine hohe Antriebsdrehzahl mit relativ geringem Drehmoment am Hauptantriebsstrang und damit an der Antriebswelle der Kupplungseinrichtung 22,22' anliegt, wobei bei geringer oder gar keiner Drehzahl am Abtrieb der Kupplungseinrichtung 22,22' an diesem ein hohes Drehmoment erzeugt wird.

### Bezugszeichenliste

- 1: Erntegerät, Vorsatzgerät
- 2: Trägerfahrzeug , Erntemaschine, Feldhäcksler
- 3: Maschinengestell
- 4: Mäh- und Förderelement
- 5: Kupplungseinrichtung
- 6: Hochachsen
- 7: Einzugsspalt
- 8: Einzugsgehäuse
- 9: Mähscheibe
- 10: Fördertrommel
- 11: Winkelgetriebe
- 12: Antriebswelle
- 13: Abtriebswelle
- 14: Vorgelegewelle
- 15: Winkelgetriebe
- 16: Hohlprofil
- 17: Gelenkwelle
- 18: Hauptantriebsstrang
- 19: Winkelgetriebe
- 20: Mittelwelle
- 21,21': Endwelle
- 22,22': Kupplungseinrichtung, Turbokupplung, Drehmomentwandler
- 23: Teilabschnitt
- 24: Teilabschnitt
- 25: Teilabschnitt
- 26: Flanschelement
- 27: untere Einzugs- und Förderscheibe
- 28: obere Einzugs- und Förderscheibe

- A: Arbeitsbreite
- F: Fahrt- und Arbeitsrichtung
- M: Motor

## Patentansprüche

1. Erntegerät als Vorsatzgerät (1) für landwirtschaftliche Erntemaschinen insbesondere Feldhäcksler (2) zum Mähen, Aufnehmen und Weiterführen eines stängelartigen Erntegutstroms in den Einzugsspalt des Einzugsgehäuses der weiterverarbeitenden Erntemaschine als Trägerfahrzeug des Erntegerätes, mit wenigstens zwei Mäh- und Förderelementen (4), wobei jedes Mäh- und Förderelement (4) um die gemeinsame Hochachse (6) der Abtriebswelle eines Winkelgetriebes (11) umlaufend angetriebene Rotationselemente, ausgebildet als Mähscheibe (9) und Fördertrommel (10) mit einer unteren und einer oberen Einzugs- und Förderscheibe (27, 28) zur Aufnahme und Förderung der Pflanzenstängel aufweist, und wobei die Antriebswelle des Winkelgetriebes mit einer Vorgelegewelle antriebseitig in Wirkverbindung steht, wobei die Mähscheibe (9) und die Fördertrommel (10) bildende untere und obere Einzugs- und Förderscheibe (27, 28) wenigstens eines Mäh- und Förderelements (4) derart miteinander gekoppelt sind, dass eine Kupplungseinrichtung (5) vorhanden ist, die es ermöglicht, dass die Mähscheibe (9) und die Förderscheiben (10,10') zumindest zeitweise während der Hochlaufphase mit ungleicher Winkelgeschwindigkeit beschleunigt werden können, **dadurch gekennzeichnet, dass** die Kupplungseinrichtung (5) als Turbokupplung ausgebildet ist, die mit einer Überbrückung ausgestaltet ist, die bei einer Drehrichtungsumkehr wirksam wird.

2. Erntegerät nach Anspruch 1, **dadurch gekennzeichnet, dass** die Mähscheibe (9) drehfest und die Fördertrommel (10) zumindest während der Hochlaufphase schlupfaufweisend mit der Abtriebswelle (13) des Winkelgetriebes (11) verbunden ist.

3. Erntegerät nach Anspruch 1, **dadurch gekennzeichnet, dass** die Fördertrommel (10) drehfest und die Mähscheibe (9) zumindest während der Hochlaufphase schlupfaufweisend mit der Abtriebswelle (13) des Winkelgetriebes (11) verbunden ist.

4. Erntegerät nach Anspruch 3, **dadurch gekennzeichnet, dass** die Kupplungseinrichtung (5) als selbsttätig durchschaltende Turbokupplung ausgebildet ist.

5. Erntegerät nach Anspruch 1, **dadurch gekennzeichnet, dass** wenigstens eine Kupplungseinrichtung (5) als Drehmomentwandler als Föttinger-Wandler ausgebildet ist.

## Claims

1. A harvesting device as an attachment (1) for agricultural harvesters, in particular forage harvesters (2) for mowing, picking up and passing a stalk-like crop material flow into the intake gap of the intake housing of the harvester conducting further processing in the form of a carrier vehicle of the harvesting device, comprising at least two mowing and conveyor elements (4), wherein each mowing and conveyor element (4) has rotational elements driven in rotation about the common vertical axis (6) of the output shaft of an angular transmission (11) and in the form of a mowing disc (9) and conveyor drum (10) having a lower and an upper intake and conveyor disc (27, 28) for picking up and conveying the plant stalks, and wherein the drive shaft of the angular transmission is operatively connected at the drive side to a countershaft, wherein lower and upper intake and conveyor discs (27, 28) forming the mowing disc (9) and the conveyor drum (10) of at least one mowing and conveyor element (4) are coupled together in such a way that there is a coupling device (5) which makes it possible that the mowing disc (9) and the conveyor discs (10,10') can at least at times be accelerated during the start-up phase at unequal angular speeds, **characterised in that** the coupling device (5) is in the form of a turbo coupling equipped with a bypass means which comes into operation upon a reversal in the direction of rotation.

2. A harvesting device according to claim 1 **characterised in that** the mowing disc (9) is connected non-rotatably and the conveyor drum (10) is connected in slippage relationship at least during the start-up phase to the output shaft (13) of the angular transmission (11).

3. A harvesting device according to claim 1 **characterised in that** the conveyor drum (10) is connected non-rotatably and the mowing disc (9) is connected in slippage relationship at least during the start-up phase to the output shaft (13) of the angular transmission (11.)

4. A harvesting device according to claim 3 **characterised in that** the coupling device (5) is in the form of an automatically connecting turbo coupling.

5. A harvesting device according to claim 1 **characterised in that** at least one coupling device (5) is in the form of a torque converter as a Föttinger converter.

## Revendications

1. Outil de récolte faisant fonction d'outil frontal (1) pour des machines agricoles de récolte, en particulier des ensileuses (2) pour faucher, ramasser et transférer un flux de produit récolté en tiges dans l'interstice d'alimentation du carter d'alimentation de la machine de récolte de traitement ultérieur faisant fonction de véhicule porteur de l'outil de récolte, comprenant au moins deux éléments de fauchage et de convoyage (4), chaque élément de fauchage et de convoyage (4) comportant des éléments rotatifs entraînés en rotation autour de l'axe vertical commun (6) de l'arbre de sortie d'un engrenage angulaire (11), conformés en disque de coupe (9) et en tambour de convoyage (10) avec des disques d'alimentation et de convoyage inférieur et supérieur (27, 28) pour ramasser et convoyer les tiges de plantes, et l'arbre d'entraînement de l'engrenage angulaire étant en liaison active côté menant avec un arbre intermédiaire, les disques d'alimentation et de convoyage inférieure et supérieur (27, 28), formant le disque de coupe (9) et le tambour de convoyage (10), d'au moins un élément de fauchage et de convoyage (4) étant accouplés entre eux, de façon à obtenir un équipement d'accouplement (5) qui permet d'accélérer au moins temporairement le disque de coupe (9) et les disques de convoyage (10, 10') avec une vitesse angulaire différente pendant la phase de montée en régime, **caractérisé en ce que** l'équipement d'accouplement (5) est conformé en turbo-accouplement, lequel est pourvu d'un pontage qui est actif en cas d'inversion de sens de rotation.

2. Outil de récolte selon la revendication 1, **caractérisé en ce que** le disque de coupe (9) est relié de manière solidaire en rotation à l'arbre de sortie (13) de l'engrenage angulaire (11) et le tambour de convoyage (10) l'est, avec glissement, au moins pendant la phase de montée en régime.

3. Outil de récolte selon la revendication 1, **caractérisé en ce que** le tambour de convoyage (10) est relié de manière solidaire en rotation à l'arbre de sortie (13) de l'engrenage angulaire (11) et le disque de coupe (9) l'est, avec glissement, au moins pendant la phase de montée en régime.

4. Outil de récolte selon la revendication 3, **caractérisé en ce que** l'équipement d'accouplement (5) est conçu sous la forme d'un turbo-accouplement à actionnement automatique.

5. Outil selon la revendication 1, **caractérisé en ce qu'**au moins un équipement d'accouplement (5) est conçu sous la forme d'un convertisseur de couple sous la forme d'un convertisseur Föttinger.
